# EUROPÄISCHE PATENTSCHRIFT

(11) **EP 2 363 309 B1**
(45) Veröffentlichungstag und Bekanntmachung des Hinweises auf die Patenterteilung: **06.02.2013**
(21) Anmeldenummer: 10154615.8
(22) Anmeldetag: 25.02.2010
(51) Int. Cl.: B60G 17/052, B60G 17/016

(54) **Verfahren zum Betreiben einer Niveauregeleinrichtung eines Fahrzeugs**
Method for operating a level regulating device on a vehicle
Procédé de fonctionnement d'un dispositif de réglage du niveau d'un véhicule

(43) Veröffentlichungstag der Anmeldung: 07.09.2011
(73) Patentinhaber: KNORR-BREMSE Systeme für Nutzfahrzeuge GmbH, 80809 München (DE)
(72) Erfinder: Naber, Thomas, 48683, Ahaus (DE); Bounds, Joseph, Fishers, 46038 (US)
(74) Vertreter: Schönmann, Kurt

(56) Entgegenhaltungen:
- EP-A1- 0 192 178
- EP-A2- 1 256 466
- EP-B1- 1 644 209
- DE-A1- 10 352 186
- DE-A1-102006 016 140
- DE-A1-102006 016 989
- DE-A1-102006 058 686
- JP-A- 57 172 808
- JP-A- 58 030 809
- JP-A- 59 023 713
- US-A1- 2005 212 225

## Beschreibung

Die Erfindung geht aus einem Verfahren zum Betreiben einer Niveauregeleinrichtung eines Fahrzeugaufbaus eines Fahrzeugs, welche wenigstens eine Luftfeder beinhaltet, gemäß dem Oberbegriff von Anspruch 1.

Das Luftvolumen von Luftfedern wird einerseits zur Federung von Achsen von Kraftfahrzeugen genutzt. Andererseits ermöglichen solche Luftfedern durch Be- und Entlüften von Luftfederbälgen mittels einer Ventileinrichtung eine Niveauregelung, welche vor allem für Nutzfahrzeuge Vorteile bietet, wenn deren Fahrzeugaufbau z.B. zum Beladen auf das Niveau einer Rampe eingestellt oder zur Vermeidung eines schiefen Aufbaus aufgrund einer exzentrischen Beladung eine Korrektur durchgeführt werden muss. Dabei kann jedem Rad oder auch nur jeder Achse ein Luftbalg zugeordnet sein. Eine solche Niveauregeleinrichtung ist beispielsweise aus der DE 10 2006 016 989 A1 bekannt.

Als Federelemente der Luftfedern kommen Faltenbälge oder Rollbälge zum Einsatz, wobei eine einen Rollbalg aufweisende Luftfeder beispielsweise in der DE 10 2006 016 140 A1 beschrieben wird. Demnach besteht der Rollbalg aus einem elastomeren Material, welches sich beim Be- und Entlüften bzw. bei einer Niveauänderung des Fahrzeugaufbaus verformt und weist insbesondere eine Abrollfalte auf, die an einer radial äußeren Umfangswand eines Abrollkolbens abrollbar ist.

Es ist bekannt, dass der Verschleiß der Faltenbälge bzw. Rollbälge ein Problem darstellt und dass verschleißbedingt insbesondere Balgrisse auftreten können. Der Schwachpunkt bei Rollbälgen liegt am häufigsten in der Abrollfalte, d.h. der Stelle des Rollbalgs, an welcher der das Material seine größte Richtungsumlenkung erfährt und an welcher sich die Dehnung des Materials in Quer- und Längsrichtung bei jeder Hubbewegung abwechseln.

Da ein Austausch der Faltenbälge bzw. Rollbälge in einer Fachwerkstatt durchgeführt werden muss, steht das Fahrzeug für den Reparaturzeitraum nicht mehr zur Nutzung zur Verfügung, was vor allem bei gewerblich eingesetzten Nutzfahrzeugen von Nachteil ist.

Um dem Problem des Verschleißes von Luftfederbälgen zu begegnen, wird gemäß DE 10 2006 016 140 A1 vorgeschlagen, dass der Luftfederbalg auf mindestens einer seiner radialen Mantelflächen eine sich über die gesamte Mantelfläche ersteckende Schutzschicht aus einer Textilen Struktur aufweist. Damit soll die elastomere Mantelfläche gegen äußere Einflüsse geschützt werden.

Die DE 10 2006 058 686 A1 schlägt zur Vermeidung von temperaturbedingtem Verschleiß von Rollbälgen vor, die mittlere Temperatur der Rollbalgwandung durch Kühlung zu verringern, indem Kühlluft dem Druckluftspeicher des Luftfedersystems entnommen wird.

Neben temperatur- und durch äußere Einflüsse bedingtem Verschleiß ergibt sich jedoch auch eine Abnutzung der Luftfederbälge aufgrund der im Einsatz vorliegenden mechanischen Belastungen.

In der gattungsgemäßen EP 1 644 209 B1 wird eine Niveauregeleinrichtung eines Fahrzeugs mit einer Luftfeder beschrieben, wobei ein Steuergerät der Niveauregeleinrichtung ein Soll-Niveau für die Luftfeder einstellt. Wenn eine Kippneigung des Fahrzeugs auftritt oder bei hohen Geschwindigkeiten wird das Soll-Niveau reduziert, bei einem Erkennen einer Fahrt im Gelände dagegen erhöht. Ein ähnliches System wird in JP 58 030809 A beschrieben.

Der vorliegenden Erfindung liegt demgegenüber die Aufgabe zugrunde, ein Verfahren zum Betreiben einer Niveauregeleinrichtung eines Fahrzeugaufbaus der eingangs erwähnten Art zur Verfügung zu stellen, mit welchem der Verschleiß der Luftfedern reduziert wird.

Diese Aufgabe wird erfindungsgemäß durch die Merkmale von Anspruch 1 gelöst.

### Offenbarung der Erfindung

Während der Fahrt eines luftgefederten Fahrzeugs mit Niveauregulierung wird stets ein zu bevorzugendes Soll-Niveau eingeregelt, so dass beispielsweise die Abrollfalte eines Rollbalgs während der Fahrt durch den Innendruck belastet stets an der gleichen Stelle maximal gebogen wird, wodurch eine stellenweise hohe Dauerbelastung gegeben ist.

Es wird deshalb vorgeschlagen, dass das Niveau des Fahrzeugsaufbaus zu Beginn, während oder unmittelbar vor Beendigung einer Fahrt wenigstens einmal auf ein von einem für die Fahrt vorgegebenen Soll-Niveau abweichendes Niveau eingestellt wird.

Erfindungsgemäß wird das Niveau des Fahrzeugsaufbaus während eines Zeitraums ausgehend vom Beginn einer Fahrt bis unmittelbar vor Beendigung der Fahrt in regelmäßigen zeitlichen Abständen auf ein von dem für die Fahrt vorgegebenen Soll-Niveau abweichendes Niveau eingestellt. Diese automatische Verstellung des Niveaus findet bevorzugt im Rahmen der Niveauregelung durch das Steuergerät der Niveauregulierungseinrichtung statt. Durch mehrmaliges Verstellen des Niveaus während der Fahrt wird die Belastung nicht nur in Bezug auf die Fläche des Rollbalgs sondern auch zeitlich verteilt. Dabei kann insbesondere bei jeder Verstellung des Niveaus auch ein gegenüber dem vorangehenden Niveau abweichendes Niveau eingestellt werden.

In der vom Soll-Niveau abweichenden Niveaulage bildet dann beispielsweise bei einem Rollbalg in Längs- oder Einfederungsrichtung der Luftfeder gesehen ein anderer Abschnitt der Mantelwand die Abrollfalte des Rollbalgs, d.h. die Stelle maximaler Umlenkung oder Durchbiegung des elastomeren Materials als dies beim Soll-Niveau der Fall ist. Folglich werden während der Fahrt unterschiedliche Bereiche der Mantelwand des Rollbalgs maximal belastet, wodurch sich der Verschleiß der Balgwand nicht mehr nur auf den dem Soll-Niveau zugeordneten Bereich beschränkt, sondern auf größere Bereiche der Balgwand verteilt wird. Dies resultiert in einer gleichmäßigeren Belastung der Balgwand durch Biegung und Dehnung, was den stellenweisen Verschleiß herabsetzt, mithin ist eine Verlängerung der Lebensdauer der nach dem erfindungsgemä-βen Verfahren betriebenen Luftfederbälge zu erwarten.

Da die wenigstens einmalige Änderung des Niveaus des Fahrzeugaufbaus aus der Soll-Niveaulage heraus zu Beginn einer Fahrt, während der Fahrt bzw. unmittelbar vor dem Ende einer Fahrt erfolgen soll, ist darauf zu achten, dass nur vom Soll-Niveau abweichende Niveauwerte eingenommen werden, welche nicht zu einer Gefährdung oder Verletzung von Verkehrsvorschriften führen können. Die Niveauänderung(en) finden daher auch bevorzugt sehr langsam statt.

Die Erfindung ist nicht auf Luftfedern mit Rollbälgen beschränkt, sondern kann auch auf Luftfedern mit Faltenbälgen angewandt werden.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt wird das Niveau des Fahrzeugsaufbaus zu Beginn, während oder unmittelbar vor Beendigung der Fahrt derart variiert, dass wenigstens einmal ein Verstellbereich von einem unteren Niveauwert bis zu einem oberen Niveauwert durchlaufen wird, wobei der obere Niveauwert und der untere Niveauwert von dem für die Fahrt vorgesehenen Soll-Niveau abweichen. Insbesondere ist dieser Verstellbereich der gesamte während einer Fahrt mögliche Verstellbereich, wobei der untere Niveauwert durch das während der Fahrt kleinste einstellbare Niveau und der obere Niveauwert durch das Während der Fahrt größte einstellbare Niveau gebildet wird. Der Begriff "möglicher Verstellbereich" ist dabei von einem maximal bzw. minimal möglichen Niveauwert begrenzt, welche zugelassen sind und nicht zu einer Gefährdung oder Verletzung von Verkehrsvorschriften führen können. Dadurch gelangt die maximal mögliche Fläche beispielsweise der Balgwand eines Rollbalgs in den Bereich der am stärksten verformten Abrollfalte, so dass auf diese Weise die Belastung der Balgwand auf die größtmögliche Fläche verteilt wird.

Genaueres geht aus der folgenden Beschreibung eines Ausführungsbeispiels hervor.

### Zeichnung

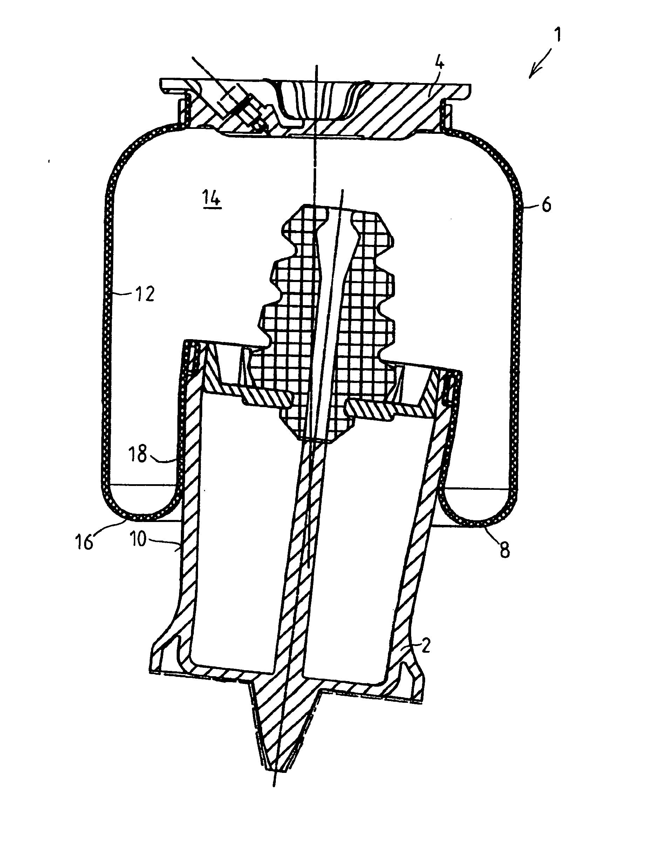

Nachstehend ist ein Ausführungsbeispiel der Erfindung in der Zeichnung dargestellt und in der nachfolgenden Beschreibung näher erläutert. In der Zeichnung zeigt die einzige Figur eine Querschnittdarstellung einer Luftfeder mit einem Rollbalg gemäß einer bevorzugten Ausführungsform der Erfindung.

### Beschreibung des Ausführungsbeispiels

Die Figur zeigt eine an sich bekannte Luftfeder 1 mit einem Abrollkolben 2, einem mit vertikalem Abstand angeordneten Balgdeckel 4 sowie mit einem Rollbalg 6 aus einem elastomeren Werkstoff, welcher mit einer Abrollfalte 8 an einer radial äußeren Umfangsfläche 10 des Abrollkolbens abrollt. Wie aus der Figur anschaulich hervorgeht, stellt die Abrollfalte 8 dabei den Abschnitt der Balgwand 12 dar, welcher die stärkste Umlenkung bzw. Biegung, hier um etwa 180 Grad erfährt.

Dabei umschließt der Rollbalg 6 zusammen mit dem Balgdeckel 4 und dem Abrollkolben 2 eine Luftkammer 14, welche zum Einstellen des Niveaus eines Fahrzeugaufbaus gegenüber einem Fahrzeugfahrgestell be- bzw. entlüftbar ist.

Die Luftfeder 1 ist dabei von einer Luftfederungseinrichtung mit Niveauregelung umfasst, mit welcher ein Niveau-Sollwert manuell, beispielsweise zum Beladen von Anhängern an Rampen und/oder im Rahmen einer Regelung automatisch eingestellt bzw. eingeregelt werden kann.

Wenn das Fahrzeug in Fahrt gesetzt wird bzw. sich in Fahrt befindet, wird zunächst wie beim Stand der Technik das Niveau des Fahrzeugaufbaus von einem hier nicht gezeigten Steuergerät der Niveauregulierungseinrichtung gegenüber dem Fahrzeugfahrgestell auf ein vorgegebenes Soll-Niveau eingeregelt. Bei diesem Soll-Niveau befindet sich dann beispielsweise der in der Figur mit der Bezugszahl 16 gekennzeichnete Abschnitt der Balgwand 12 des Rollbalgs 6 im Bereich der Abrollfalte 8.

Wenn dann das Niveau des Fahrzeugsaufbaus zu Beginn, während oder unmittelbar vor Beendigung einer Fahrt wenigstens einmal auf ein von dem für die Fahrt vorgegebenen Soll-Niveau abweichendes Niveau eingestellt wird, hier beispielsweise auf ein gegenüber dem Soll-Niveau höheres Niveau, so rollt der Rollbalg mit seinem an dem Abrollkolben befestigten Ende auf dessen äußerer Umfangsfläche 10 in der Figur nach oben ab, so dass ein anderer, hier mit der Bezugszahl 18 gekennzeichneter Abschnitt des Rollbalgs 6 in den Bereich der Abrollfalte 8 gerät.

Folglich bilden während der Fahrt unterschiedliche Abschnitte 16 bzw. 18 der Balgwand 12 des Rollbalgs 6 die am stärksten belastete Abrollfalte 8 aus, wodurch der der Verschleiß der Balgwand 12 nicht mehr nur auf den dem Soll-Niveau zugeordneten Abschnitt 16 beschränkt ist.

Besonders bevorzugt wird das Niveau des Fahrzeugsaufbaus zu Beginn, während oder unmittelbar vor Beendigung der Fahrt derart variiert, dass wenigstens einmal ein Verstellbereich von einem unteren Niveauwert bis zu einem oberen Niveauwert durchlaufen wird, wobei der obere Niveauwert und der untere Niveauwert von dem für die Fahrt vorgesehenen Soll-Niveau abweichen.

Insbesondere ist dieser Verstellbereich der gesamte während einer Fahrt mögliche Verstellbereich, wobei der untere Niveauwert durch das während der Fahrt kleinste einstellbare Niveau und der obere Niveauwert durch das während der Fahrt größte einstellbare Niveau gebildet wird. Dadurch gelangt die maximal mögliche Fläche der Balgwand 12 des Rollbalgs 6 in den Bereich der am stärksten verformten Abrollfalte 8, so dass auf diese Weise die Belastung der Balgwand 12 größtmöglich verteilt wird.

Der gewählte Bereich zwischen dem unteren Niveauwert und dem oberen Niveauwert bzw. der vom Soll-Niveau abweichende Niveauwert hängen insbesondere von der Beschaffenheit der gerade befahrenen Strasse, insbesondere von dort etwaig vorliegenden Unebenheiten ab. So sind auf einer relativ ebenen Strasse geringe Federwege ausreichend, während auf unebenen Strassen ein größerer Federweg notwendig ist. Bevorzugt wird daher die Beschaffenheit der gerade befahrenen Strasse durch eine Sensoreinrichtung, beispielsweise durch am Fahrwerk angebrachte Beschleunigungsaufnehmer erfasst und der Verstellbereich von dem unteren Niveauwert bis zu dem oberen Niveauwert bzw. der von dem für die Fahrt vorgegebenen Soll-Niveau abweichende Niveauwert abhängig von der Beschaffenheit der Strasse eingestellt.

Dies führt dazu, dass auf ebener Strasse eher auf einem niedrigeren Niveauwert gefahren als dies das bei unebener Strasse der Fall ist. Durch das Fahren auf einem von dem für die Fahrt vorgegebenen Soll-Niveau abweichenden niedrigeren Niveauwert wird zusätzlich noch Energie gespart, da das Fahrzeug aerodynamischer wird. Bevorzugt werden die Fahrzeiten auf den unterschiedlichen Niveaus abhängig von der Beschaffenheit der Strasse aufaddiert und über die Gesamtfahrzeit gleichmäßig verteilt.

Weiterhin kann das Niveau des Fahrzeugsaufbaus während eines Zeitraums ausgehend vom Beginn einer Fahrt bis unmittelbar vor Beendigung der Fahrt in regelmäßigen oder unregelmäßigen zeitlichen Abständen auf ein von dem für die Fahrt vorgegebenen Soll-Niveau abweichendes Niveau eingestellt werden. Diese automatische Verstellung des Niveaus findet bevorzugt im Rahmen der Niveauregelung durch das Steuergerät der Niveauregulierungseinrichtung statt.

Dabei wird insbesondere bei jeder Einstellung des Niveaus des Fahrzeugaufbaus auf ein vom Soll-Niveau abweichendes Niveau ein gegenüber dem vorangehenden Niveau abweichendes Niveau eingestellt.

Die Zeitdauern, während der das Soll-Niveau und das oder die vom Soll-Niveau abweichende Niveau(s) eingestellt werden, hängen dabei von Faktoren wie der Fahrzeit, der Belastung des Rollbalgs ab oder der Beschaffenheit der Strasse ab und werden vom Fachmann nach Erfordernis festgelegt.

Die oben beschriebenen Ausführungen des Verfahrens können einzeln und jeweils in Kombination untereinander durchgeführt werden.

### Bezugszeichenliste

- 1: Luftfeder
- 2: Abrollkolben
- 4: Balgdeckel
- 6: Rollbalg
- 8: Abrollfalte
- 10: Umfangsfläche
- 12: Balgwand
- 14: Luftkammer
- 16: Abschnitt
- 18: Abschnitt

## Patentansprüche

1. Verfahren zum Betreiben einer Niveauregeleinrichtung eines Fahrzeugaufbaus eines Fahrzeugs, welche wenigstens eine Luftfeder (1) beinhaltet, wobei bei in Fahrt gesetztem oder in Fahrt befindlichem Fahrzeug das Niveau des Fahrzeugsaufbaus von einem Steuergerät der Niveauregeleinrichtung gegenüber einem Fahrzeugfahrgestell auf ein vorgegebenes Soll-Niveau eingeregelt wird und wobei das Niveau des Fahrzeugsaufbaus zu Beginn, während oder unmittelbar vor Beendigung einer Fahrt wenigstens einmal auf ein von dem für die Fahrt vorgegebenen Soll-Niveau abweichendes Niveau eingestellt wird, **dadurch gekennzeichnet, dass** das Niveau des Fahrzeugsaufbaus während eines Zeitraums ausgehend vom Beginn einer Fahrt bis unmittelbar vor Beendigung der Fahrt in regelmäßigen zeitlichen Abständen auf ein von dem für die Fahrt vorgegebenen Soll-Niveau abweichendes Niveau eingestellt wird.

2. Verfahren nach Anspruch 1, **dadurch gekennzeichnet, dass** das Niveau des Fahrzeugsaufbaus zu Beginn, während oder unmittelbar vor Beendigung der Fahrt derart variiert wird, dass wenigstens einmal ein Verstellbereich von einem unteren Niveauwert bis zu einem oberen Niveauwert durchlaufen wird, wobei der obere Niveauwert und der untere Niveauwert von dem für die Fahrt vorgesehenen Soll-Niveau abweichen.

3. Verfahren nach Anspruch 2, **dadurch gekennzeichnet, dass** der Verstellbereich der gesamte während einer Fahrt mögliche Verstellbereich ist, wobei der untere Niveauwert durch das während der Fahrt kleinste einstellbare Niveau und der obere Niveauwert durch das während der Fahrt größte einstellbare Niveau gebildet wird.

4. Verfahren nach einem der vorhergehenden Ansprüche, **dadurch gekennzeichnet, dass** bei jeder. Einstellung des Niveaus des Fahrzeugaufbaus auf ein vom Soll-Niveau abweichendes Niveau ein gegenüber dem vorangehenden Niveau abweichendes Niveau eingestellt wird.

5. Verfahren nach einem der Ansprüche 2 bis 4, **dadurch gekennzeichnet, dass** das vom Soll-Niveau abweichende Niveau oder der Verstellbereich von dem unteren Niveauwert bis zu dem oberen Niveauwert abhängig von der Beschaffenheit der befahrenen Strasse festgelegt wird.

6. Verfahren nach Anspruch 5, **dadurch gekennzeichnet, dass** die Beschaffenheit der befahrenen Strasse durch eine Sensoreinrichtung online erfasst wird.

## Claims

1. Method of operating a level regulating device on a vehicle body of a vehicle, which device includes at least one air cushion (1), wherein the level of the vehicle body is regulated by a controller of said level regulating device to a predetermined set level value relative to a vehicle undercarriage when the vehicle is started or is moving and wherein the level of said vehicle body is adjusted at least once to a level different from the set level value predetermined for the movement of the vehicle at the beginning, during or immediately before termination of a movement of the vehicle, **characterised in that** the level of said vehicle body is adjusted to a level different from the set level predetermined for the movement of the vehicle at regular intervals during a period starting from the beginning of a movement of the vehicle up to immediately before termination of the movement of the vehicle.

2. Method according to Claim 1, **characterised in that** the level of the vehicle body is varied at the beginning, during or immediately before the termination of the movement in such a way that the adjustment passes at least once through an adjustment range from a lower level value up to an upper level value, with said upper level value and said lower level value differing from the set level value envisaged for the movement of the vehicle.

3. Method according to Claim 2, **characterised in that** said adjustment range is the complete adjustment range possible during a tour, with said lower level value being constituted by the smallest level value adjustable while the vehicle is moving and with said upper level value being constituted by the highest level adjustable while the vehicle is moving.

4. Method according to any of the preceding Claims, **characterised in that** every time when the level of the vehicle body is adjusted to a level different from said set level value a level is set that is different from the preceding level.

5. Method according to any of the Claims 2 to 4, **characterised in that** said level different from said set level or said adjustment range from said lower level value to said upper level value is determined as a function of the condition of the road on which the vehicle is moving.

6. Method according to Claim 5, **characterised in that** the condition of the road on which the vehicle is moving is detected on-line by a sensor means.

## Revendications

1. Procédé d'actionner un dispositif de réglage du niveau de la caisse d'un véhicule, ce dispositif renfermant au moins un coussin d'air (1), dans lequel le niveau de la caisse de véhicule est réglé par une unité de commande dudit dispositif de réglage du niveau à une valeur de niveau de consigne prédéterminée, relative au châssis du véhicule, quand le véhicule est démarré ou se trouve en marche, et dans lequel le niveau de ladite caisse du véhicule est ajusté au moins une fois à un niveau différent de la valeur de niveau de consigne prédéterminé pour la marche du véhicule au début, au cours ou directement avant la fine de la marche du véhicule, **caractérisé en ce que** le niveau de ladite caisse du véhicule est ajusté à un niveau différent du niveau de consigné prédéterminé pour la marche du véhicule aux intervalles réguliers au cours d'une période commençant à partir du début d'une marche du véhicule jusqu'à un point directement avant la fin de la marche du véhicule.

2. Procédé selon la revendication 1, **caractérisé en ce que** le niveau de ladite caisse de véhicule est varié au début, au cours ou directement avant la fin de la marche d'une telle manière, que l'ajustement se fasse au moins une fois à travers une gamme d'ajustement à partir d'une valeur de niveau inférieure jusqu'à une valeur de niveau supérieure, à ladite valeur de niveau supérieure et ladite valeur de niveau inférieure étant différentes de la valeur de niveau de consigne envisagée pour la marche du véhicule.

3. Procédé selon la revendication 2, **caractérisé en ce que** ladite gamme d'ajustement est la gamme complète d'ajustement, qui est possible au cours d'une tour, à ladite valeur de niveau inférieure étant constituée par la plus petite valeur de niveau ajustable, pendant que le véhicule se trouve en marche, et à ladite valeur de niveau supérieure étant constituée par le plus haut niveau ajustable au cours de la marche du véhicule.

4. Procédé selon une quelconque des revendications précédentes, **caractérisé en ce que** chaque fois que le niveau de la caisse du véhicule est ajusté à un niveau différent de la valeur de niveau de consigne, un niveau est ajusté qui est différent du niveau précédent.

5. Procédé selon une quelconque des revendications 2 to 4, **caractérisé en ce que** ledit niveau différent dudit niveau de consigne ou ladite gamme d'ajustement à partir de ladite valeur de niveau inférieure jusqu'à ladite valeur de niveau supérieure est déterminé en fonction de la condition de la route sur laquelle le véhicule se trouve en marche.

6. Procédé selon la revendication 5, **caractérisé en ce que** la condition de la route, sur laquelle le véhicule se trouve en marche, est détectée en ligne par un moyen capteur.
